# EUROPEAN PATENT SPECIFICATION

(11) **EP 2 689 973 B1**
(45) Date of publication and mention of the grant of the patent: **16.09.2015**
(21) Application number: 13177550.4
(22) Date of filing: 23.07.2013
(51) Int. Cl.: B60R 21/015

(54) **Key cylinder device**
Schlüsselzylindervorrichtung
Dispositif de cylindre à clé

(30) Priority: 27.07.2012 JP 2012166932
(43) Date of publication of application: 29.01.2014
(73) Proprietor: KABUSHIKI KAISHA TOKAI RIKA DENKI SEISAKUSHO, Niwa-gun, Aichi 480-0195 (JP); Toyota Jidosha Kabushiki Kaisha, Toyota-shi, Aichi 471-8571 (JP)
(72) Inventor: Nakamura, Masahide, Niwa-gun, Aichi 480-0195 (JP); Mizutani, Takeshi, Niwa-gun, Aichi 480-0195 (JP); Nakamura, Haruki, Toyota-shi, Aichi 471-8571 (JP); Kamiya, Kenichi, Toyota-shi, Aichi 471-8571 (JP)
(74) Representative: TBK

(56) References cited:
- DE-A1- 10 215 940

## Description

The present invention relates to a key cylinder device.

For safety reasons, a vehicle includes an airbag cutoff switch that selectively invalidates the deployment of an airbag when desired by a vehicle occupant (e.g., Japanese Laid-Open Patent Publication Nos. 2000-198410, 8-216825, and 11-227558).

A mechanical key is used to switch the airbag cutoff switch between an activated state and a deactivated state. The mechanical key is normally used to lock and unlock a vehicle door and start the engine.

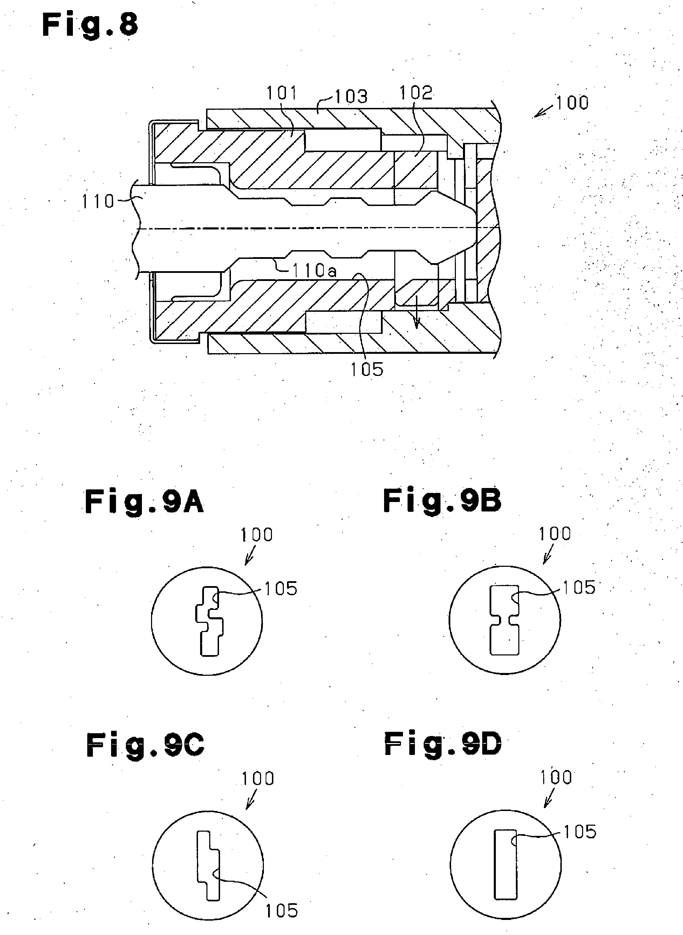

For example, referring to Fig. 8, an airbag cutoff switch device 100, which is one type of a key cylinder device, includes a rotor 101, a block 102, and a tubular case 103. The rotor 101 and the block 102 are rotatably accommodated in the case 103. A key groove 105, which corresponds to a mechanical key 110, extends along an inner surface of the rotor 101 and the block 102. The key groove 105 does not correspond to a unique key pattern 110a of the mechanical key 110. Rather, the key groove 105 corresponds to the type of the mechanical key 110. Referring to Figs. 9A to 9D, the key groove 105 is shaped to conform to different types of corresponding mechanical keys 110.

When the mechanical key 110 is not inserted into the key groove 105, the block 102 is urged toward the inner surface (upper portion) of the case 103. This restricts rotation of the rotor 101.

When the mechanical key 110 is inserted into the key groove 105, the distal end of the mechanical key 110 lowers the block 102. This cancels the urging of the block 102 so that the rotor 101 is rotatable with the mechanical key 110 relative to the case 103.

The rotation of the rotor 101 switches connection conditions of contacts (not shown). This switches the airbag cutoff switch device between activated and deactivated states.

In this structure, the key groove 105 is shaped in conformance with different types of the mechanical key 110. Thus, the airbag cutoff switch device 100 has low versatility.

Accordingly, it is an object of the present invention to provide a key cylinder device having higher versatility.

One aspect of the present invention is a key cylinder device including a case having an inner surface. A rotor is accommodated in the case. The rotor includes a key groove into which a mechanical key is inserted, and the rotor is rotatable relative to the case about a rotation axis when the mechanical key is inserted into the key groove. A block extends through the rotor in a direction orthogonal to the rotation axis of the rotor. An urging portion urges the block toward the inner surface of the case to hold the block at an engagement position. When the mechanical key is not inserted into the key groove, the block located at the engagement position restricts rotation of the rotor relative to the case. When the mechanical key is inserted into the key groove along the rotation axis of the rotor, the mechanical key moves the block from the engagement position to a disengagement position in a direction opposite to the direction the block is urged and thereby permits rotation of the rotor relative to the case. The key groove has a size allowing for insertion of multiple types of mechanical keys corresponding to the key cylinder device. The key cylinder device includes a guide along which the mechanical key slides to correct inclination of the mechanical key relative to the rotation axis when the mechanical key is inserted into the key groove so that the mechanical key extends along the rotation axis of the rotor.

To allow for insertion of multiple types of mechanical keys, the size of a key groove should conform to the larger ones of the mechanical keys. In this case, depending on the type of the mechanical key, when the key groove has a larger size than the mechanical key, the mechanical key may become inclined in the key groove relative to the rotation axis. As a result, the block may not move to the disengagement position even though the mechanical key is inserted into the key groove. In the above structure, however, even if the mechanical key is inclined in the key groove, the guide corrects the inclination of the longitudinal direction of the mechanical key relative to the rotation axis. When the inclination is corrected, the longitudinal direction of the mechanical key conforms to the axial direction of the rotor. Thus, regardless of the type of the mechanical key, the insertion of the mechanical key into the key groove moves the block from the engagement position to the disengagement position thereby allowing for rotation of the rotor relative to the case. This improves the versatility of the key cylinder device.

In the key cylinder device, preferably, the block includes a key groove, which is in communication with the key groove of the rotor, and a contact portion, which contacts the mechanical key in the key groove of the block. A clearance allowing for entrance of a distal end of the mechanical key is formed between the guide and the contact portion. The distal end of the mechanical key enters the clearance and slides along the guide thereby correcting inclination of the mechanical key and pushing the contact portion toward the disengagement position as the mechanical key moves along the rotation axis of the rotor.

In this structure, the distal end of the mechanical key slides along the guide and corrects the inclination of the mechanical key. As the mechanical key conforms to the rotation axis of the rotor, the mechanical key pushes the contact portion toward the disengagement position and moves the block to the disengagement position. Thus, the inclination correction of the mechanical key and the movement of the block are simultaneously performed.

In the key cylinder device, preferably, the clearance between the contact portion and the guide when the mechanical key is not inserted into the key groove of the rotor is set to be smaller than a length between the contact portion and the guide when inclination of the mechanical key is corrected by the guide by a distance between the engagement position and the disengagement position.

By setting the clearance between the contact portion and the guide as described above, when the guide corrects the inclination of the mechanical key, the block is moved from the engagement position to the disengagement position with further accuracy by the mechanical key.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a block diagram showing an airbag cutoff system;
Fig. 2 is a cross-sectional view of an airbag cutoff switch device according to one embodiment of the present invention before inclination of a mechanical key is corrected;
Fig. 3 is a cross-sectional view of the airbag cutoff switch device shown in Fig. 2 after the inclination of the mechanical key is corrected;
Fig. 4 is a front view of the airbag cutoff switch device shown in Fig. 1;
Fig. 5A is a cross-sectional view of the airbag cutoff switch device taken along line A-A in Fig. 2;
Fig. 5B is a cross-sectional view of the airbag cutoff switch device taken along line B-B in Fig. 3;
Fig. 6 is a cross-sectional view corresponding to Fig. 2 and shows an airbag cutoff switch device that does not include a guide;
Fig. 7 is a cross-sectional view corresponding to Fig. 2 and shows an airbag cutoff switch device according to a further embodiment of the present invention;
Fig. 8 is a cross-sectional view corresponding to Fig. 3 and shows a prior art airbag cutoff switch device; and
Figs. 9A to 9D are front views showing prior art airbag cutoff switch devices (key grooves) corresponding to different types of mechanical keys.

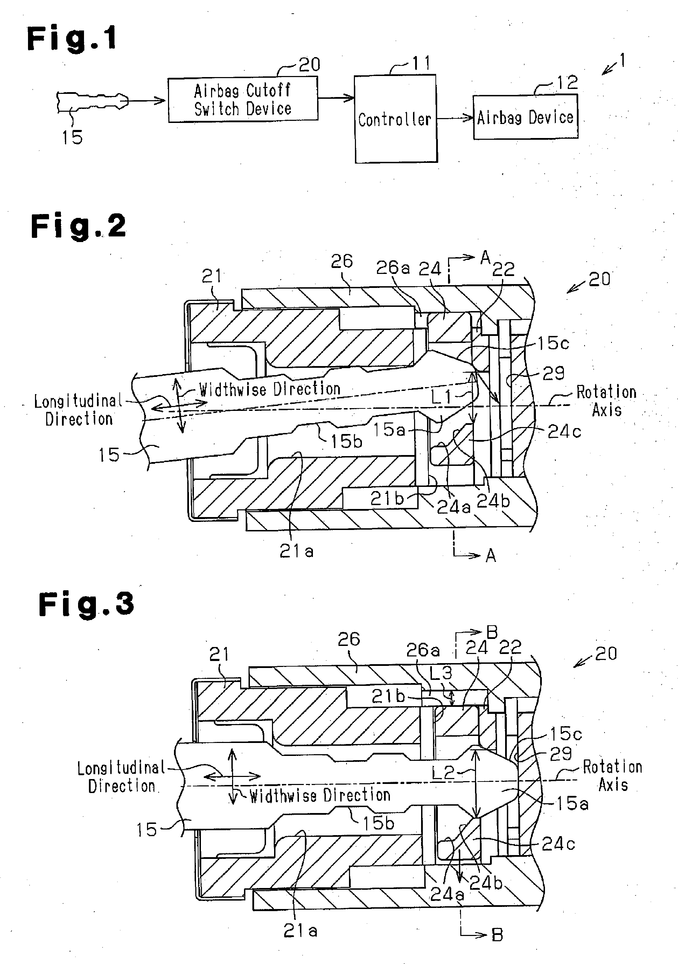

An airbag cutoff switch device according to one embodiment of the present invention will now be described with reference to Figs. 1 to 6.

As shown in Fig. 1, a vehicle 1 includes an airbag cutoff switch device 20, a controller 11, and an airbag device 12.

The controller 11 switches the airbag device 12 between an operational state and a non-operational state in accordance with whether the airbag cutoff switch device 20 is activated or deactivated. In the operational state, the airbag device 12 inflates an airbag upon detection of a strong impact applied to the vehicle 1. In the non-operational state, the airbag device 12 does not inflate the airbag regardless of impact detection. A mechanical key 15, which is held by a user, is used to switch the airbag cutoff switch device 20 between activated and deactivated states.

In detail, referring to Fig. 2, the airbag cutoff switch device 20 includes a rotor 21, a block 24, and a case 26.

The rotor 21 is cylindrical and rotatably accommodated in a tubular case 26. The rotor 21 and the block 24 respectively include key grooves 21a and 24a, which are in communication with each other. The key groove 21 a of the rotor 21 opens toward a user.

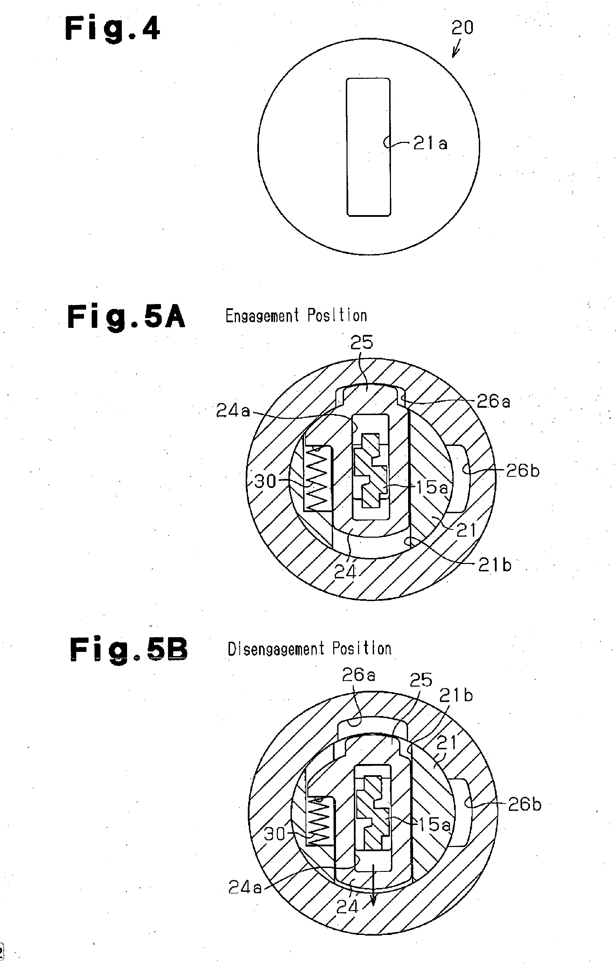

Referring to Fig. 4, the key groove 21a of the present example is formed to be large to allow for the insertion of the mechanical keys corresponding to the key grooves of Figs. 9A to 9D described in the background of the invention.

As shown in Fig. 2, the mechanical key 15 (portion of the mechanical key excluding the grip) of the present example is an elongated plate and includes a key pattern 15b including valleys and ridges formed on opposite sides of the elongated plate.

The airbag cutoff switch device 20 does not verify the key pattern 15b. Thus, the mechanical key 15 that switches the airbag cutoff switch device 20 may have different types of key patterns 15b. This is because the switching of the airbag cutoff switch device 20 does not require security as compared to the locking and unlocking of vehicle doors and the starting of the engine. In the present example, the direction in which the mechanical key 15 is elongated is referred to as a longitudinal direction, and the direction orthogonal to the longitudinal direction is referred to as a widthwise direction.

The rotor 21 includes a through hole 21 b, which extends in a direction orthogonal to a rotation axis of the rotor 21 (vertical direction as viewed in Fig. 2). As shown in Fig. 3, when the mechanical key 15 is inserted into the key groove 21 a, a key end 15a of the mechanical key 15 is arranged in the through hole 21 b. Under this situation, a distal surface of the key end 15a (surface extending in the vertical direction that is orthogonal to the rotation axis of the rotor 21) contacts an inner wall 29 extending in a vertical direction of the rotor 21 (orthogonal to the rotation axis of the rotor 21).

As shown in Fig. 5A, the block 24 has a generally frame-shaped cross-section. The block 24 has an inner surface forming the key groove 24a. The block 24 includes an upper portion that defines a block end 25 extending in an upward direction.

The block 24 is received in the through hole 21b. A spring 30, which serves as an urging portion, is arranged between the block 24 and the rotor 21. The elastic force of the spring 30 urges the block 24 toward the inner surface of the case 26.

The inner surface of the case 26 includes two engagement holes 26a and 26b that receive the block end 25. The block 24 is moved between an engagement position shown in Fig. 5A and a disengagement position shown in Fig. 5B. At the engagement position, the block end 25 is fitted to the engagement hole 26a or 26b. At the disengagement position, the block end 25 is disengaged from the engagement holes 26a and 26b. When the mechanical key 15 is not inserted into the key groove 24a, the spring 30 urges the block 24 toward the inner surface of the case 26 and holds the block 24 at the engagement position.

The engagement holes 26a and 26b are separated by a predetermined angle about the rotation axis of the rotor 21. The predetermined angle corresponds to the angle by which the mechanical key 15 is rotated to switch the airbag cutoff switch device 20 between activated and deactivated states.

The rotor 21 includes a guide 22 that corrects the inclination of the mechanical key 15. As shown in Fig. 2, the guide 22 is plate-shaped and located adjacent to the upper right side of the block 24. The guide 22 includes a distal end that projects into the key groove 24a as viewed in the axial direction. The distal end of the guide 22 projects radially inward from the inner surface of the block 24 forming the key groove 24a. This allows the distal end to come into contact with the key end 15a received in the key groove 24a. That is, the guide 22 is arranged at a position allowing for contact from the upper side with the key end 15a received in the key groove 24a.

As shown in Fig. 2, the key groove 24a of the block 24 includes a lower portion defining a contact portion 24c that comes into contact with the key end 15a. The contact portion 24c includes an inclined surface 24b that is inclined upward toward the right as viewed in Fig. 2. That is, the inclined surface 24b is inclined upward toward the inner wall 29 of the rotor 21.

A process for setting a clearance L1 (refer to Fig. 2) between the guide 22 and the contact portion 24c when the mechanical key 15 is not received will now be described. Referring to Fig. 3, L2 represents a length between the contact portion 24c and the guide 22 when the guide 22 corrects the inclination of the mechanical key 15, and L3 represents the distance between the engagement position and disengagement position of the block 24. In this case, L1 is set to satisfy the equation of "L1 =L2-L3." In other words, by setting the clearance L1 between the guide 22 and the contact portion 24c with the equation, the block 24 is allowed to move from the engagement position to the disengagement position.

The operation of the airbag cutoff switch device 20 will now be described. The user performs the tasks described below.

Referring to Fig. 2, the user first inserts the mechanical key 15 into the key groove 21a of the rotor 21. The mechanical key 15 is of a type having a small cross-section relative to the key groove 21a. In this case, the mechanical key 15 may enter the key grooves 21a and 24a so that the longitudinal direction is diagonally inclined toward the upper right side relative to the axial direction. Thus, the key end 15a of the mechanical key 15 contacts the guide 22.

Further insertion of the mechanical key 15 toward the right slides the key end 15a of the mechanical key 15 along the guide 22. The key end 15a includes an inclined surface 15c that contacts the guide 22, and the inclined surface 15c is inclined upward toward the basal end of the mechanical key 15. As the inclined surface 15c of the mechanical key 15 moves along the guide 22, the guide 22 lowers the mechanical key 15. As a result, the longitudinal direction of the mechanical key 15 conforms to the axial direction as shown in Fig. 3. This corrects the inclination of the mechanical key 15. As indicated by arrows in Figs. 3 and 5B, the inclination correction lowers the block 24 from the engagement position to the disengagement position against the elasticity of the spring 30. Here, the key end 15a is in contact with three locations, namely, the inner wall 29, the guide 22, and the contact portion 24c. When the block 24 is lowered from the engagement position to the disengagement position, rotation of the rotor 21 is permitted. This allows for the airbag cutoff switch device 20 to be switched between activated and deactivated states.

When the user inserts the mechanical key 15 into the key groove 21 a of the rotor 21, the mechanical key 15 may enter the key grooves 21a and 24a so that the longitudinal direction is diagonally inclined toward the lower right side relative to the axial direction. Thus, the key end 15a of the mechanical key 15 contacts the inclined surface 24b of the contact portion 24c. Further insertion of the mechanical key 15 toward the right slides the key end 15a of the mechanical key 15 along the inclined surface 24b of the contact portion 24c. As a result, the longitudinal direction of the mechanical key 15 conforms to the axial direction and the inclination of the mechanical key 15 is corrected.

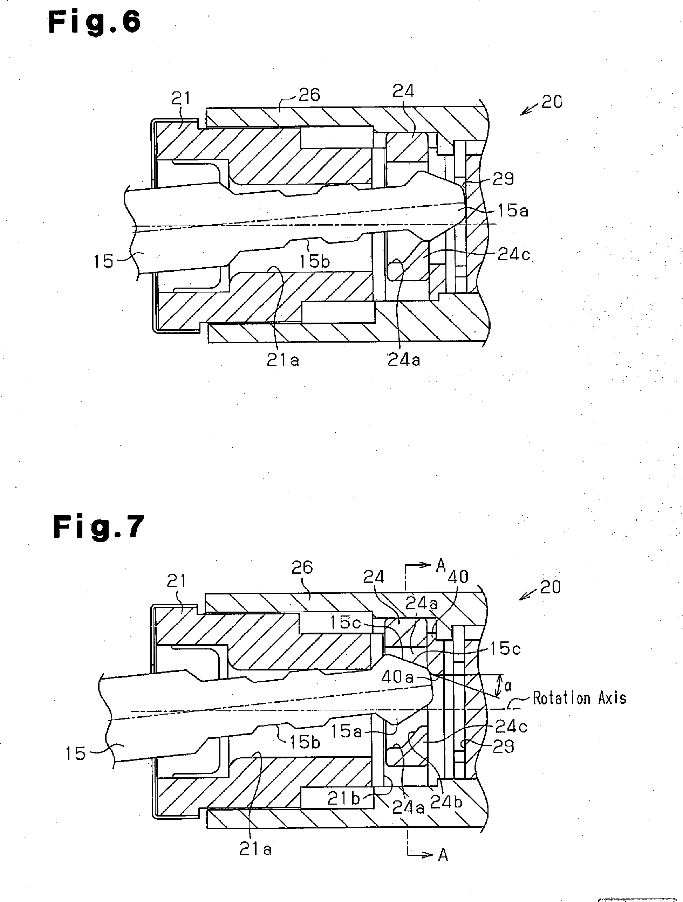

Fig. 6 shows an airbag cutoff switch device that does not include the guide 22 for comparison with the present embodiment. Since this structure does not include the guide 22, the mechanical key 15 may remain inclined especially when the key pattern 15b has a smaller width than the key grooves 21a and 24a. In this case, the mechanical key 15 does not contact the contact portion 24c. Thus, the block 24 cannot be lowered to the disengagement position, and the rotor 21 cannot be rotated. As a result, the airbag cutoff switch device 20 cannot be switched between activated and deactivated states.

The above embodiment has the advantages described below.
(1) To allow for insertion of multiple types of mechanical keys, the size of a key groove should conform to the larger ones of the mechanical keys. In this case, depending on the type of the mechanical key, when the key groove has a larger size than the mechanical key, the mechanical key may become inclined in the key groove relative to the rotation axis. As a result, the block 24 may not move to the disengagement position even though the mechanical key is inserted into the key groove. In the above embodiment, however, even if the mechanical key is inclined in the key groove 21a, the guide 22 corrects the inclination of the longitudinal direction of the mechanical key 15 relative to the rotation axis. When the inclination is corrected, the longitudinal direction of the mechanical key 15 conforms to the axial direction of the rotor 21. Thus, regardless of the type of the mechanical key 15, the insertion of the mechanical key 15 into the key groove 21 a moves the block 24 from the engagement position to the disengagement position thereby allowing for rotation of the rotor 21 relative to the case 26. This eliminates the need to manufacture the airbag cutoff switch device 20 in correspondence with each type of mechanical key and thereby improves the versatility of the airbag cutoff switch device 20.
(2) The mechanical key 15 pushes the contact portion 24c toward the disengagement position as the key end 15a of the mechanical key 15 slides along the guide 22 and corrects the inclination of the mechanical key 15. Thus, the inclination correction of the mechanical key 15 and the movement of the block 24 are simultaneously performed.
(3) The clearance L1 between the contact portion 24c and the guide 22 when the mechanical key 15 is not received is set as a value obtained by subtracting the distance L3 between the engagement position and the disengagement position of the block 24 from the length L2 between the contact portion 24c and the guide 22 when the guide 22 corrects the inclination of the mechanical key 15. This moves the block 24 from the engagement position to the disengagement position further accurately with the mechanical key 15, the inclination of which has been corrected by the guide 22.
(4) As shown in Fig. 3, when the mechanical key 15 is inserted into the innermost section of the key groove 21 a, the upper surface, lower surface, and end surface of the key end 15a respectively contact the guide 22, the contact portion 24c, and the inner wall 29. This stably holds the key end 15a in the key groove 21a. Accordingly, even if the user releases the mechanical key 15 under this situation, the key end 15a remains at the same position.

It should be apparent to those skilled in the art that the present invention may be embodied in many other specific forms. Particularly, it should be understood that the present invention may be embodied in the following forms.

The shape of the guide 22 in the above embodiment may be changed. For example, as shown in Fig. 7, a guide 40 may include a lower surface (surface that contacts the mechanical key 15) formed by an inclined surface 40a. The inclined surface 40a extends downward toward the right side as viewed in the drawing and is inclined by a predetermined inclination angle α relative to the rotation axis of the rotor 21. This structure ensures that the key end 15a is.guided toward the rotation axis (downward) along the inclined surface 40a.

In the above embodiment, a key cylinder device is applied as the airbag cutoff switch device 20. However, the key cylinder device may be applied for other applications.

The above embodiment includes two engagement holes 26a and 26b. Instead, three or more engagement holes may be used depending on the application of the key cylinder device.

In the above embodiment, the urging portion is the spring 30 but may be a different elastic member such as a rubber member.

Technical concepts that can be recognized from the above embodiment will now be described.
(a) The key cylinder device according to any one of claims 1 to 3, wherein the rotor is rotated relative to the case to positions for switching between a condition permitting deployment of an airbag and a condition prohibiting deployment of the airbag.
(b) The key cylinder device according to any one of claims 1 to 3 and concept (a), wherein the rotor is rotatable relative to the case when insertion of the mechanical key into the key groove moves the block to the disengagement position of the block regardless of a key pattern of the mechanical key.

When a mechanical key (15) inserted into a key groove (21 a) is inclined relative to a rotation axis of a rotor (21), the inclination is corrected as the mechanical key (15) slides along a guide (22). When the inclination is corrected, the longitudinal direction of the mechanical key (15) conforms to the axial direction of the rotor (21). Thus, regardless of the type of the mechanical key (15), insertion of the mechanical key (15) into the key groove (21 a) moves a block (24) from an engagement position to a disengagement position and allows for rotation of the rotor (21) relative to a case. This eliminates the need to manufacture an airbag cutoff switch device (20) for each type of mechanical key and improves the versatility of the airbag cutoff switch device (20).

## Claims

1. A key cylinder device (20) including
a case (26) having an inner surface;
a rotor (21) accommodated in the case (26), wherein the rotor (21) includes a key groove (21a) into which a mechanical key (15) is inserted, and the rotor (21) is rotatable relative to the case (26) about a rotation axis when the mechanical key (15) is inserted into the key groove (21 a);
a block (24) extending through the rotor (21) in a direction orthogonal to the rotation axis of the rotor (21); and
an urging portion (30) that urges the block (24) toward the inner surface of the case (26) to hold the block (24) at an engagement position, wherein
when the mechanical key (15) is not inserted into the key groove (21a), the block (24) located at the engagement position restricts rotation of the rotor (21) relative to the case (26), and
when the mechanical key (15) is inserted into the key groove (21a) along the rotation axis of the rotor (21), the mechanical key (15) moves the block (24) from the engagement position to a disengagement position in a direction opposite to the direction the block (24) is urged and thereby permits rotation of the rotor (21) relative to the case (26), the key cylinder device (20) being **characterized by**:
a guide (22) along which the mechanical key (15) slides to correct inclination of the mechanical key (15) relative to the rotation axis when the mechanical key (15) is inserted into the key groove (21 a) so that the mechanical key (15) extends along the rotation axis of the rotor (21), and
wherein the key groove (21a) has a size allowing for insertion of multiple types of mechanical keys corresponding to the key cylinder device (20).

2. The key cylinder device (20) according to claim 1, being **characterized in that**:
the block (24) includes a key groove (24a), which is in communication with the key groove (21a) of the rotor (21), and a contact portion (24c), which contacts the mechanical key (15) in the key groove (24a) of the block (24);
a clearance (L1) allowing for entrance of a distal end (15a) of the mechanical key (15) is formed between the guide (22) and the contact portion (24c); and
the distal end (15a) of the mechanical key (15) enters the clearance (L1) and slides along the guide (22) thereby correcting inclination of the mechanical key (15) and pushing the contact portion (24c) toward the disengagement position as the mechanical key (15) moves along the rotation axis of the rotor (21).

3. The key cylinder device (20) according to claim 2, being **characterized in that** the clearance (L1) between the contact portion (24c) and the guide (22) when the mechanical key (15) is not inserted into the key groove (21a) of the rotor (21) is set to be smaller than a length (L2) between the contact portion (24c) and the guide (22) when inclination of the mechanical key (15) is corrected by the guide (22).

4. The key cylinder device (20) according to claim 2, being **characterized in that** the clearance (L1) between the contact portion (24c) and the guide (22) when the mechanical key (15) is not inserted into the key groove (21a) of the rotor (21) is set to be smaller than a length (L2) between the contact portion (24c) and the guide (22) when inclination of the mechanical key (15) is corrected by the guide (22) by a distance (L3) between the engagement position and the disengagement position.

5. The key cylinder device (20) according to any one of claims 2 to 4, being **characterized in that** the contact portion (24c) includes an inclined surface (24b) that is inclined upward toward an inner wall (29) of the rotor (21).

6. The key cylinder device (20) according to any one of claims 1 to 5, being **characterized in that** an upper surface, a lower surface, and an end surface of the mechanical key (15a) respectively contact the guide (22), the contact portion (24c), and an inner wall (29) that is orthogonal to the rotation axis of the rotor (21).

7. The key cylinder device (20) according to any one of claims 2 to 6, being **characterized in that** the guide (22) is plate-shaped, adjacent to the block, and includes a distal end capable of contacting the distal end of the mechanical key (15) when the mechanical key (15) enters the key groove (24a).

8. The key cylinder device (20) according to any one of claims 2 to 7, being **characterized in that** the guide (40) includes an inclined surface (40a) capable of contacting the distal end (15a) of the mechanical key (15) that enters the key groove (24a).

## Patentansprüche

1. Schlüsselzylindervorrichtung (20) mit
einem Gehäuse (26) mit einer Innenfläche;
einem Rotor (21), der im Gehäuse (26) aufgenommen ist, wobei der Rotor (21) eine Schlüsselnut (21a) hat, in die ein mechanischer Schlüssel (15) eingesetzt wird, und der Rotor (21) relativ gegenüber dem Gehäuse (26) um eine Rotationsachse drehbar ist, wenn der mechanische Schlüssel (15) in die Schlüsselnut (21a) eingesetzt ist;
einem Block (24), der sich durch den Rotor (21) erstreckt in einer Richtung senkrecht zu der Rotationsachse des Rotors (21); und
einem Drängabschnitt (30), der den Block (24) in Richtung der Innenfläche des Gehäuses (26) drängt, um den Block (24) an einer Eingriffsposition zu halten, wobei
wenn der mechanische Schlüssel (15) nicht in die Schlüsselnut (21a) eingesetzt ist, der Block (24), der an der Eingriffsposition liegt, eine Drehung des Rotors (21) relativ zum Gehäuse (26) begrenzt, und
wenn der mechanische Schlüssel (15) in die Schlüsselnut (21a) entlang der Rotationsachse des Rotors (21) eingesetzt wird, der mechanische Schlüssel (15) den Block (24) von der Eingriffsposition zu einer Nichteingriffsposition in einer Richtung entgegengesetzt zu der Richtung bewegt, in der der Block (24) gedrängt wird, und dadurch eine Drehung des Rotors (21) relativ zum Gehäuse (26) gestattet, wobei die Schlüsselzylindervorrichtung (20) **gekennzeichnet ist durch**:
eine Führung (22), entlang welcher der mechanische Schlüssel (15) gleitet, um eine Neigung des mechanischen Schlüssels (15) relativ zu der Rotationsachse zu korrigieren, wenn der mechanische Schlüssel (15) in die Schlüsselnut (21a) eingesetzt wird, sodass sich der mechanische Schlüssel (15) entlang der Rotationsachse des Rotors (21) erstreckt, und
wobei die Schlüsselnut (21a) eine Größe hat, die ein Einsetzen von mehreren Typen von mechanischen Schlüsseln gestattet, die zu der Schlüsselzylindervorrichtung (20) korrespondieren.

2. Schlüsselzylindervorrichtung (20) nach Anspruch 1, **dadurch gekennzeichnet, dass**
der Block (24) eine Schlüsselnut (24a), welche in Verbindung mit der Schlüsselnut (21a) des Rotors (21) ist, und einen Berührungsabschnitt (24c) hat, welcher den mechanischen Schlüssel (15) in der Schlüsselnut (24a) des Blocks (24) berührt;
ein Freiraum (L1), der ein Eintreten eines entfernten Endes (15a) des mechanischen Schlüssels (15) gestattet, der zwischen der Führung (22) und dem Berührungsabschnitt (24c) ausgebildet ist; und
das entfernte Ende (15a) des mechanischen Schlüssels (15) in den Freiraum (L1) eintritt und entlang der Führung (22) gleitet, wodurch eine Neigung des mechanischen Schlüssels (15) korrigiert wird und der Berührungsabschnitt (24c) in Richtung der Nichteingriffsposition gedrückt wird, während sich der mechanische Schlüssel (15) entlang der Rotationsachse des Rotors (21) bewegt.

3. Schlüsselzylindervorrichtung (20) nach Anspruch 2, **dadurch gekennzeichnet, dass**
der Freiraum (L1) zwischen dem Berührungsabschnitt (24c) und der Führung (22), wenn der mechanische Schlüssel (15) nicht in die Schlüsselnut (21a) des Rotors (21) eingesetzt ist, festgelegt ist, um kleiner zu sein als eine Länge (L2) zwischen dem Berührungsabschnitt (24c) und der Führung (22), wenn eine Neigung des mechanischen Schlüssels (15) durch die Führung (22) korrigiert wird.

4. Schlüsselzylindervorrichtung (20) nach Anspruch 2, **dadurch gekennzeichnet, dass**
der Freiraum (L1) zwischen dem Berührungsabschnitt (24c) und der Führung (22), wenn der mechanische Schlüssel (15) nicht in die Schlüsselnut (21a) des Rotors (21) eingesetzt ist, festgelegt ist, um um eine Distanz (L3) zwischen der Eingriffsstellung und der Nichteingriffsstellung kleiner zu sein als eine Länge (L2) zwischen dem Berührungsabschnitt (24c) und der Führung (22), wenn eine Neigung des mechanischen Schlüssels (15) durch die Führung (22) korrigiert wird.

5. Schlüsselzylindervorrichtung (20) nach einem der Ansprüche 2 bis 4, **dadurch gekennzeichnet, dass**
der Berührungsabschnitt (24c) eine geneigte Fläche hat, die aufwärts in Richtung einer inneren Wand (29) des Rotors (21) geneigt ist.

6. Schlüsselzylindervorrichtung (20) nach einem der Ansprüche 1 bis 5, **dadurch gekennzeichnet, dass**
eine obere Fläche, eine untere Fläche und eine Endfläche des mechanischen Schlüssels (15a) entsprechend die Führung (22), den Berührungsabschnitt (24c) und eine innere Wand (29) berühren, die senkrecht zu der Rotationsachse des Rotors (21) ist.

7. Schlüsselzylindervorrichtung (20) nach einem der Ansprüche 2 bis 6, **dadurch gekennzeichnet, dass**
die Führung (22) plattenförmig ist, benachbart zu dem Block ist, und ein entferntes Ende hat, das in der Lage ist, das entfernte Ende des mechanischen Schlüssels (15) zu berühren, wenn der mechanische Schlüssel (15) in die Schlüsselnut (24a) eintritt.

8. Schlüsselzylindervorrichtung (20) nach einem der Ansprüche 2 bis 7, **dadurch gekennzeichnet, dass**
die Führung (40) eine geneigte Fläche (40a) hat, die in der Lage ist, das entfernte Ende (15a) des mechanischen Schlüssels (15) zu berühren, der in die Schlüsselnut (24a) eintritt.

## Revendications

1. Dispositif de barillet de serrure (20) comportant un boîtier (26) ayant une surface intérieure ;
un rotor (21) logé dans le boîtier (26), dans lequel le rotor (21) comporte une rainure de clef (21a) dans laquelle une clef mécanique (15) est insérée, et le rotor (21) peut tourner par rapport au boîtier (26) autour d'un axe de rotation lorsque la clef mécanique (15) est insérée dans la rainure de clef (21a) ;
un bloc (24) s'étendant à travers le rotor (21) dans une direction orthogonale à l'axe de rotation du rotor (21) ; et
une partie de poussée (30) qui pousse le bloc (24) vers la surface intérieure du boîtier (26) pour maintenir le bloc (24) au niveau d'une position d'engagement, où
lorsque la clef mécanique (15) n'est pas insérée dans la rainure de clef (21a), le bloc (24) situé au niveau de la position d'engagement limite la rotation du rotor (21) par rapport au boîtier (26), et
lorsque la clef mécanique (15) est insérée dans la rainure de clef (21a) le long de l'axe de rotation du rotor (21), la clef mécanique (15) déplace le bloc (24) de la position d'engagement à une position de désengagement dans une direction opposée à la direction à laquelle le bloc (24) est poussé et permet ainsi la rotation du rotor (21) par rapport au boîtier (26), le dispositif de barillet de serrure (20) étant **caractérisé par** :
un guide (22) le long duquel la clef mécanique (15) coulisse pour corriger une inclinaison de la clef mécanique (15) par rapport à l'axe de rotation lorsque la clef mécanique (15) est insérée dans la rainure de clef (21a) de sorte que la clef mécanique (15) s'étende le long de l'axe de rotation du rotor (21), et
dans lequel la rainure de clef (21a) a une dimension permettant l'insertion de plusieurs types de clefs mécaniques correspondant au dispositif de barillet de serrure (20).

2. Dispositif de barillet de serrure (20) selon la revendication 1, étant **caractérisé en ce que** :
le bloc (24) comporte une rainure de clef (24a), qui est en communication avec la rainure de clef (21a) du rotor (21), et une partie de contact (24c), qui entre en contact avec la clef mécanique (15) dans la rainure de clef (24a) du bloc (24) ;
un jeu (L1) permettant l'entrée d'une extrémité distale (15a) de la clef mécanique (15) est formé entre le guide (22) et la partie de contact (24c) ; et
l'extrémité distale (15a) de la clef mécanique (15) entre dans le jeu (L1) et coulisse le long du guide (22) corrigeant ainsi une inclinaison de la clef mécanique (15) et poussant la partie de contact (24c) vers la position de désengagement à mesure que la clef mécanique (15) se déplace le long de l'axe de rotation du rotor (21).

3. Dispositif de barillet de serrure (20) selon la revendication 2, étant **caractérisé en ce que** le jeu (L1) entre la partie de contact (24c) et le guide (22) lorsque la clef mécanique (15) n'est pas insérée dans la rainure de clef (21a) du rotor (21) est réglé pour être inférieur à une longueur (L2) entre la partie de contact (24c) et le guide (22) lorsqu'une inclinaison de la clef mécanique (15) est corrigée par le guide (22).

4. Dispositif de barillet de serrure (20) selon la revendication 2, étant **caractérisé en ce que** le jeu (L1) entre la partie de contact (24c) et le guide (22) lorsque la clef mécanique (15) n'est pas insérée dans la rainure de clef (21a) du rotor (21) est réglé pour être inférieur à une longueur (L2) entre la partie de contact (24c) et le guide (22) lorsqu'une inclinaison de la clef mécanique (15) est corrigée par le guide (22) par une distance (L3) entre la position d'engagement et la position de désengagement.

5. Dispositif de barillet de serrure (20) selon l'une quelconque des revendications 2 à 4, **caractérisé en ce que** la partie de contact (24c) comporte une surface inclinée (24b) qui est inclinée vers le haut en direction d'une paroi intérieure (29) du rotor (21).

6. Dispositif de barillet de serrure (20) selon l'une quelconque des revendications 1 à 5, étant **caractérisé en ce qu'**une surface supérieure, une surface inférieure, et une surface d'extrémité de la clef mécanique (15a), entrent respectivement en contact avec le guide (22), la partie de contact (24c), et une paroi intérieure (29) qui est orthogonale à l'axe de rotation du rotor (21).

7. Dispositif de barillet de serrure (20) selon l'une quelconque des revendications 2 à 6, étant **caractérisé en ce que** le guide (22) a une forme de plaque, adjacent au bloc, et comporte une extrémité distale capable d'entrer en contact avec l'extrémité distale de la clef mécanique (15) lorsque la clef mécanique (15) entre dans la rainure de clef (24a).

8. Dispositif de barillet de serrure (20) selon l'une quelconque des revendications 2 à 7, étant **caractérisé en ce que** le guide (40) comporte une surface inclinée (40a) capable d'entrer en contact avec l'extrémité distale (15a) de la clef mécanique (15) qui entre dans la rainure de clef (24a).
